# EUROPÄISCHE PATENTSCHRIFT

(11) **EP 3 050 433 B1**
(45) Veröffentlichungstag und Bekanntmachung des Hinweises auf die Patenterteilung: **27.03.2019**
(21) Anmeldenummer: 16152077.0
(22) Anmeldetag: 20.01.2016
(51) Int. Cl.: A01K 31/00

(54) **SITZEINRICHTUNG FÜR GEFLÜGEL**
PERCH ASSEMBLY FOR POULTRY
PERCHOIR POUR VOLAILLE

(30) Priorität: 20.01.2015 DE 202015000269 U
(43) Veröffentlichungstag der Anmeldung: 03.08.2016
(73) Patentinhaber: Big Dutchman International GmbH, 49377 Vechta (DE)
(72) Erfinder: Lebedev, Ilja, 49360 Vechta (DE)
(74) Vertreter: Eisenführ Speiser

(56) Entgegenhaltungen:
- DE-U1-202013 002 001
- DE-U1-202013 002 291
- GB-A- 692 304
- GB-A- 2 428 646
- US-A1- 2011 061 601

## Beschreibung

Die Erfindung betrifft ein Geflügelstalleinrichtungselement und einen Geflügelstall mit einem solchen Geflügelstalleinrichtungselement.

Die Aufzucht und Mast von Geflügel, insbesondere von Masthähnchen (Broiler) wird häufig unter anderem in Bodenhaltung durchgeführt. Bei der Bodenhaltung befinden sich die Tiere eine gewisse Zeitspanne auf einem mit Einstreu bedeckten Fußboden.

Diese Art der Bodenhaltung ist grundsätzlich bekannt. Es ist bekannt, die Tiere dabei in Ställen zu halten, welche eine Begrenzung der Fußbodenfläche durch Seitenwände beinhalten. Um den Tieren einen ausreichenden Freilauf bei zugleich wirtschaftlicher Aufzucht zu gewähren, ist es bekannt, die Tiere mit zunehmender Größe entsprechend ihrem Wachstum umzustallen, um die Flächenbelegung - also die Anzahl der Tiere pro Flächenmaß - an die zunehmende Größe der Tiere anzupassen.

Aus GB 692 304 A ist ein Geflügelstall bekannt, der einen als Spaltenboden ausgebildeten erhöhten Boden aufweist, der höher als die Ebene liegt, auf dem die Nester angeordnet ist und bei dem Rampen vorgesehen sind, um die Nester mit dem erhöhten Spaltenboden zu verbinden.

Als problematisch in der Bodenhaltung hat sich aber erwiesen, dass diese Haltungsform den Tieren nur in eingeschränktem Maße ein natürliches Verhalten ermöglicht. Ein weiteres Problem ist das Auftreten von Erkrankungen bei den in Bodenhaltung aufgezogenen Tieren. Der Erfindung liegt die Aufgabe zugrunde, eine Verbesserung für diese Probleme bereitzustellen.

Erfindungsgemäß wird den bestehenden Problemen abgeholfen, indem ein Geflügelstalleinrichtungselement gemäß Anspruch 1, umfassend einen Rahmen, an dem Aufstellelemente befestigt sind zur Befestigung des Rahmens in einer Position oberhalb eines Stallbodens, zumindest ein Flächenelement, das mit dem Rahmen verbunden ist und eine horizontale obere Aufstandsfläche und eine Vielzahl von Durchtrittsöffnungen aufweist und eine an dem Rahmen oder dem Flächenelement befestigte Rampe, die sich ausgehend von dem Rahmen schräg nach unten erstreckt. Das Geflügelstalleinrichtungselement stellt eine erhöhte Ebene in einem Geflügelstall dar. Die in dem Geflügelstall, insbesondere in Bodenhaltung, gehaltenen Tiere können die Rampe hochlaufen und sich auf der höheren Ebene auf der Aufstandsfläche des Flächenelements aufhalten. Dies führt maßgeblich zur Auslebung von arttypischen Verhaltensweisen.

Mit der Erfindung wird weiterhin eine erhöhte Sitzgelegenheit geschaffen, um dem natürlichen Verhalten zum Wohl der Tiere entgegenzukommen. Weiterhin wird durch die erhöhte zusätzliche Fläche mehr Nutzfläche und mehr Bewegungsmöglichkeiten für die Tiere innerhalb des Stalls erreicht. Schließlich ist ein weiterer Vorteil der Erfindung, dass die Tiere sich nicht während der gesamten Aufzucht auf Einstreu befinden müssen, sondern auf der erhöhten Aufstandsfläche des Flächenelements einen Aufenthaltsbereich ohne Einstreu vorfinden, wodurch Erkrankungen, die aus dem dauerhaften Aufenthalt auf Einstreu resultieren, vermieden werden können. Das erfindungsgemäße Flächenelement ist vorzugsweise als Kunststoffboden ausgeführt und kann perforiert sein, als Gitterfläche ausgeführt sein oder in anderer Form eine Vielzahl von Durchtrittsöffnungen aufweisen, um Kot, der von Tieren abgegeben wird, die auf dem Flächenelement aufstehen, durchzulassen und eine Verschmutzung des Flächenelements zu vermeiden. Der Rahmen kann separat von dem Flächenelement oder integral mit dem Flächenelement ausgebildet sein. Der Rahmen kann, ebenso wie das Flächenelement, aus einem Kunststoff hergestellt sein oder vorzugsweise aus einem metallischen Werkstoff zur Bereitstellung einer erhöhten Stabilität ausgebildet sein. Die Rampe kann starr oder beweglich an dem Rahmen beziehungsweise dem Flächenelement befestigt sein und erstreckt sich ausgehend von dem Flächenelement in einem solchen Winkel geneigt nach unten, dass die Rampe durch ein Tier begangen werden kann, um von der Bodenfläche auf die Aufstandsfläche des Flächenelements zu gelangen.

Bevorzugt umfassen die Aufstellelemente Befestigungswinkel zur Montage des Rahmens an einer Stallseitenwand. Diese Befestigungswinkel können als L-Profile ausgeführt sein, um den Rahmen beziehungsweise das Flächenelement in einem rechten Winkel an einer vertikalen Seitenwand des Stalls zu befestigen.

Weiterhin ist es dabei bevorzugt, eine Schwenkeinrichtung an dem Befestigungswinkel zur Verschwenkung des Rahmens und des Flächenelements an die Stallseitenwand vorzusehen. Diese Schwenkeinrichtung kann durch eine Achse gebildet sein, insbesondere kann die Schwenkeinrichtung integral mit dem Befestigungswinkel ausgebildet sein, beispielsweise als Scharnier. Die Klappung von Rahmen und Flächenelement an die Stallseitenwand kann insbesondere durch ein Hochklappen des Flächenelements erzielt werden und dazu dienen, um eine Stallreinigung durchzuführen und hierbei auch den Boden unterhalb des Geflügelstalleinrichtungselements reinigen zu können.

Weiterhin ist es bevorzugt, wenn die Aufstellelemente eine, vorzugsweise mindestens drei Stützen, die sich ausgehend von dem Rahmen nach unten erstrecken, umfassen. Grundsätzlich können bei der Ausgestaltung mit Befestigung an der Seitenwand zusätzliche Stützen vorgesehen sein, um die Stabilität und Tragfähigkeit zu erhöhen. Dabei kann es sich insbesondere bei einer Befestigung an der Seitenwand um klappbare Stützen handeln, die bei Verschwenkung des Flächenelements an die Stallseitenwand eingeklappt werden können, um ebenfalls in eine senkrechte Ausrichtung zu gelangen. Alternativ zur Seitenwandbefestigung können jedoch auch mehrere Stützen vorgesehen sein, welche den Rahmen beziehungsweise das Flächenelement auf der Bodenhaltungsfläche des Stalls in beabstandeter Form abstützen. Bei dieser Ausgestaltung kann das Geflügelstalleinrichtungselement frei im Stall im Abstand zu den Seitenwänden positioniert werden.

Weiterhin kann das Geflügelstalleinrichtungselement durch mehrere Flächenelemente fortgebildet werden, wobei die Flächenelemente vorzugsweise übereinstimmend ausgebildet sind. Durch eine solche Konstruktion kann eine modulare Größenwahl des Geflügelstalleinrichtungselements vorgenommen werden, indem zwei, drei oder mehr Flächenelemente benachbart zueinander angeordnet werden, um eine durchgehende Aufstandsfläche für die Tiere zu bilden. Dabei können auch die Rahmen übereinstimmend modular aufgebaut werden und miteinander verbunden werden, oder es können die mehreren Flächenelemente in einen entsprechend angepassten Rahmen zur Aufnahme von entsprechend mehreren Flächenelementen eingesetzt werden.

Noch weiter ist es bevorzugt, dass das/die Flächenelement(e) lösbar mit dem Rahmen verbunden sind. Durch die lösbare Verbindung der Flächenelemente mit dem Rahmen, beispielsweise mittels Rastverbindung, Verschraubung oder durch reine Schwerkraftauflage, wird eine einfache Reinigung und Montage der Flächenelemente an dem Rahmen ermöglicht.

Erfindungsgemäß ist vorgesehen, dass die Rampe schwenkbar um eine erste Achse an dem Rahmen beziehungsweise dem Flächenelement befestigt ist und die erste Achse senkrecht zur Längserstreckung der Rampe ausgerichtet ist. Bei dieser Ausgestaltung kann die Rampe leicht an unterschiedliche Bauhöhen in einem bestimmten Umfang angepasst werden und erstreckt sich durch eine in einem vorgegebenen Ausmaß unterschiedliche Neigung jeweils vom Boden bis zu der Aufstandsfläche des Flächenelements. Weiterhin kann bei dieser Ausgestaltung die Rampe in eine Ebene fluchtend zu der Aufstandsfläche des Flächenelements verschwenkt werden, beispielsweise um das Geflügelstalleinrichtungselement in eine senkrechte Ausrichtung an eine Seitenwand zu klappen und hierbei zu vermeiden, dass die Rampe aus dieser eingeklappten Position hervorsteht.

Alternativ oder zusätzlich hierzu ist erfindungsgemäß vorgesehen, dass die Rampe schwenkbar um eine zweite Achse an dem Rahmen beziehungsweise dem Flächenelement befestigt ist und die zweite Achse horizontal liegt und eine sich parallel zur Längserstreckung der Rampe ausgerichtete Richtungskomponente aufweist. Durch die Verschwenkung der Rampe um diese zweite Achse kann die Rampe auf oder unter die Aufstandsfläche des Flächenelements geklappt werden und nimmt hierdurch insgesamt weniger Platz ein, was wiederum für Reinigungsvorgänge und insbesondere für das Wegklappen des gesamten Geflügelstalleinrichtungselements an eine Seitenwand vorteilhaft ist.

Noch weiter ist es bevorzugt, das erfindungsgemäße Geflügelstalleinrichtungselement fortzubilden durch mehrere Rampen, wobei vorzugsweise zwei Rampen sich in zueinander entgegengesetzter Richtung erstrecken und/oder vorzugsweise zwei Rampen an einander gegenüberliegenden Seiten des Flächenelements angeordnet sind. Insbesondere können zwei oder vier Rampen vorgesehen sein, wobei sich bei der Ausführung mit vier Rampen jeweils zwei Rampen an einer Seite befinden und vorzugsweise gegenläufig zueinander angeordnet sind. Dabei können vorzugsweise die zwei Rampen um eine gemeinsame zweite Achse schwenkbar an dem Flächenelement beziehungsweise dem Rahmen befestigt sein, um die beiden Rampen an einer Seite gemeinsam um eine horizontale Achse so klappen zu können, dass sie auf beziehungsweise unter der Aufstandsfläche des Flächenelements zu liegen kommen.

Schließlich kann die Erfindung fortgebildet werden durch ein Kotförderband unterhalb des/der Flächenlemente(s). Ein solches Kotförderband ermöglicht die Abfuhr von Kot, der von Tieren abgesetzt wird, die sich auf der Aufstandsfläche des Flächenelements befinden. Durch diesen Abtransport wird die Gefahr von Erkrankungen wesentlich vermindert.

Ein weiterer Aspekt der Erfindung ist ein Geflügelstall mit einem Geflügelstalleinrichtungselement, das mittels Winkeln, insbesondere klappbar an einer Seitenwand befestigt ist, wie zuvor beschrieben.

Dabei ist es weiter bevorzugt, den Geflügelstall fortzubilden durch ein an der Stallseitenwand angeordnetes Arretierungselement zur Arretierung des Geflügelstalleinrichtungselements in einer an die Stallseitenwand geklappten Lage.

Ein weiterer Aspekt der Erfindung ist ein Geflügelstall mit einem Geflügelstalleinrichtungselement der zuvor beschriebenen Bauweise mit drei oder mehr Stützen, insbesondere vier oder sechs Stützen, welches freistehend in einem Geflügelstall beabstandet zu dessen Seitenwänden angeordnet ist. Dieses freistehend positionierbare Geflügelstalleinrichtungselement ermöglicht eine weitestgehend freie Anordnung und Planung eines Geflügelstalls zur Aufzucht von Tieren in Bodenhaltung mit einem oder mehreren Geflügelstalleinrichtungselementen, die innerhalb des Stalls angeordnet sind und den Tieren ein artgerechtes Verhalten ermöglichen.

Schließlich ist ein Aspekt der Erfindung gemäß Anspruch 12 eine Verwendung eines Geflügelstalleinrichtungselements der zuvor beschriebenen Bauweise in einem Stall zur Aufzucht von Geflügel in Bodenhaltung.

Weitere Merkmale und Vorteile der Erfindung werden deutlich anhand der nachfolgenden Zeichnungen, Positionsnummern und näheren Erläuterungen.

Auf den angehängten Zeichnungen dargestellt:
- Fig. 1: eine isometrische Ansicht eines erfindungsgemäßen Geflügelstalleinrichtungselementes in einer ersten Ausführungsform für die Montage an der Wand.
- Fig. 2: eine isometrische Ansicht eines erfindungsgemäßen Geflügelstalleinrichtungselementes in einer zweiten Ausführungsform selbststehend.
- Fig. 3: eine isometrische Ansicht gemäß Figur 2 mit geschwenkten Rampen.
- Fig. 4: eine isometrische Ansicht gemäß Figur 2 mit umgeklappten Rampen.
- Fig. 5: eine isometrische Ansicht mit schwenkbaren Füßen.

Das Geflügelstalleinrichtungselement umfasst im Wesentlichen mehrere kotdurchlässige Böden/Roste (1), die auf einem Rahmen/Gestell (2) aufliegen und ein Plateau bilden. Das Plateau steht auf mindestens drei Fußstützen (3). Unter den kotdurchlässigen Böden/Rosten (1) befindet sich ein Kotband (4), das den Kot auffängt. Das Plateau hat eine lichte Höhe, die ausreichend ist, dass die Tiere sich problemlos unter dem Plateau befinden und bewegen können. An der Längsseite des Plateaus ist eine klappbare Rampe (5) angebracht.

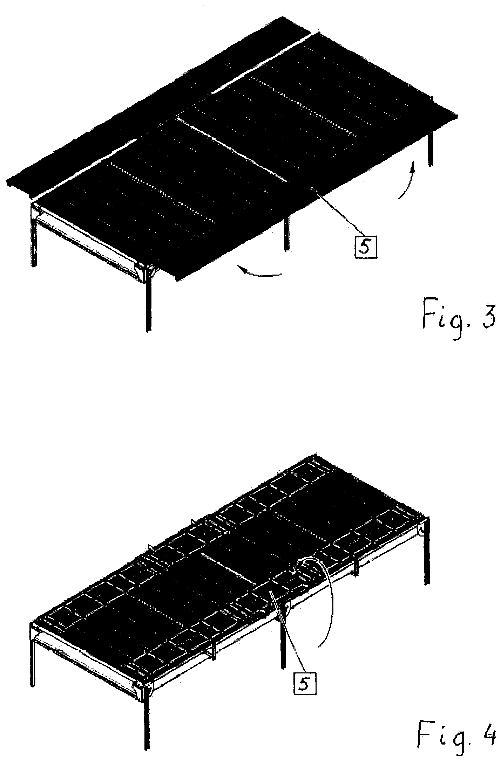

Über die Rampe (5) können die Tiere hochlaufen. Die Rampe (5) ist so gestaltet, dass die Seiten der Rampen (5) um eine erste Achse gelenkig angebracht sind und können, wie in Fig. 3 dargestellt, hochgeklappt werden.

Die Rampe (5) ist ebenso gelenkig um eine zweite Achse an der Längsseite des Plateaus befestigt, sodass die gesamte Rampe (5) wie in Fig. 4 dargestellt, umgeklappt werden kann.

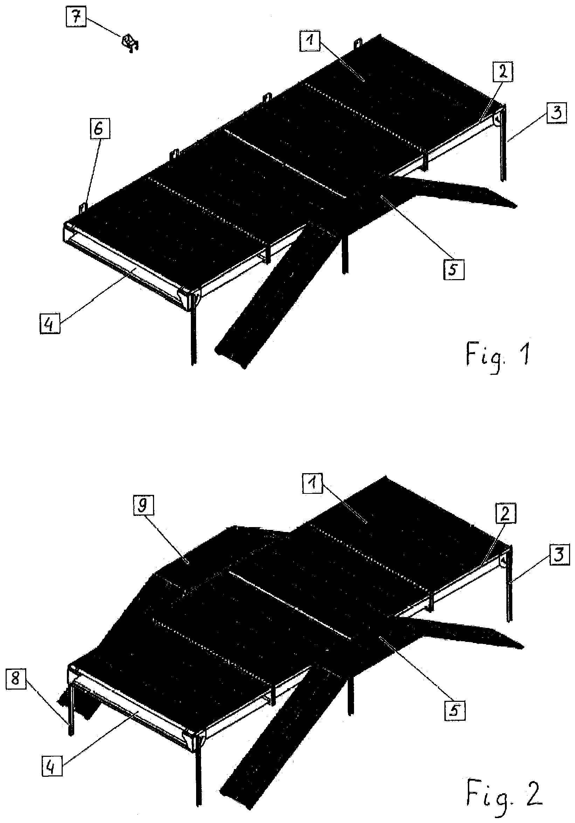

Aus den Fig. 1 und Fig. 2 ist ersichtlich, dass die erhöhte Sitzgelegenheit auf zwei Arten im Stall aufgebaut werden kann.

Das in Fig. 1 dargestellte Plateau ist für die Wandmontage vorgesehen. An der Wand werden mehrere Winkel (6) angebracht. Auf diese Winkel (6) wird das Plateau-Element aufgelegt. Auf der gegenüberliegenden Seite steht das Plateau-Element auf drei Fußstützen (3). Bei der Reinigung kann das Plateau zur Wand hin gekippt werden. Um das Plateau in der hochgeklappten Stellung zu fixieren, werden an der Wand zusätzliche Halter (7) angebracht.

Das in Fig. 2 dargestellte Plateau steht auf sechs Fußstützen (3). Somit kann das Plateau flexibel im Stall positioniert werden. Bei dieser Variante können an beiden Längsseiten des Plateaus Rampen (5) angebracht werden.

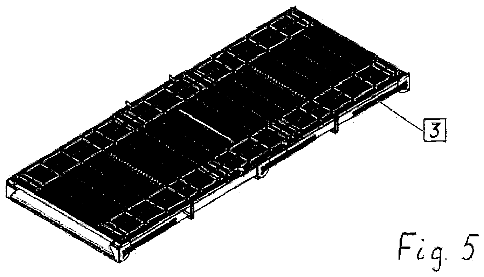

Aus der Fig. 5 ist ersichtlich, dass die Fußstützen (3) schwenkbar sind. Die Fußstützen (3) sind in dem eingeklappten Zustand so arretierbar, dass die in der Stellung bleiben.

## Patentansprüche

1. Geflügelstalleinrichtungselement, umfassend
- einen Rahmen (2), an dem Aufstellelemente (3) befestigt sind zur Befestigung des Rahmens in einer Position oberhalb eines Stallbodens,
- zumindest ein Flächenelement (1), das
∘ mit dem Rahmen verbunden ist
∘ eine horizontale obere Aufstandsfläche aufweist, und
∘ eine Vielzahl von Durchtrittsöffnungen aufweist,
- eine Rampe (5), die sich ausgehend von dem Rahmen schräg nach unten erstreckt,
**dadurch gekennzeichnet, dass**
- die Rampe (5) schwenkbar um eine erste Achse an dem Rahmen bzw. dem Flächenelement befestigt ist und die erste Achse senkrecht zur Längserstreckung der Rampe ausgerichtet ist, und/oder
die Rampe (5) schwenkbar um eine zweite Achse an dem Rahmen bzw. dem Flächenelement befestigt ist und die zweite Achse horizontal liegt und eine sich parallel zur Längserstreckung der Rampe ausgerichtete Richtungskomponente aufweist.

2. Geflügelstalleinrichtungselement nach Anspruch 1,
**dadurch gekennzeichnet, dass** die Aufstellelemente Befestigungswinkel zur Montage des Rahmens an eine Stallseitenwand umfassen.

3. Geflügelstalleinrichtungselement nach Anspruch 2,
**gekennzeichnet durch** eine Schwenkeinrichtung an dem Befestigungswinkel zur Verschwenkung des Rahmens und des Flächenelements an die Stallseitenwand.

4. Geflügelstalleinrichtungselement nach einem der vorhergehenden Ansprüche,
**dadurch gekennzeichnet, dass** die Aufstellelemente eine, vorzugsweise mindestens drei Stützen, die sich ausgehend von dem Rahmen nach unten erstrecken, umfassen.

5. Geflügelstalleinrichtungselement nach einem der vorhergehenden Ansprüche,
**gekennzeichnet durch** mehrere Flächenelemente, die vorzugsweise übereinstimmend sind.

6. Geflügelstalleinrichtungselement nach einem der vorhergehenden Ansprüche,
**dadurch gekennzeichnet, dass** das/die Flächenelement(e) lösbar mit dem Rahmen verbunden sind.

7. Geflügelstalleinrichtungselement nach einem der vorhergehenden Ansprüche,
**gekennzeichnet durch** mehrere Rampen, wobei vorzugsweise zwei Rampen sich in zueinander entgegengesetzter Richtung erstrecken und/oder vorzugsweise zwei Rampen an einander gegenüberliegenden Seiten des Flächenelements angeordnet sind.

8. Geflügelstalleinrichtungselement nach einem der vorhergehenden Ansprüche,
**gekennzeichnet durch** ein Kotförderband unterhalb des/der Flächenlemente(s).

9. Geflügelstall mit einem Geflügelstalleinrichtungselement nach dem vorhergehenden Anspruch 2 und einem der vorhergehenden Ansprüche,
**dadurch gekennzeichnet, dass** das Geflügelstalleinrichtungselement an einer Stallseitenwand befestigt ist, vorzugsweise um eine horizontale Achse klappbar befestigt ist.

10. Geflügelstall nach Anspruch 9,
**gekennzeichnet durch** ein an der Stallseitenwand angeordnetes Arretierungselement zur Arretierung des Geflügelstalleinrichtungselements in einer an die Stallseitenwand geklappten Lage.

11. Geflügelstall mit einem Geflügelstalleinrichtungselement nach dem vorhergehenden Anspruch 4 und einem der vorhergehenden Ansprüche,
**dadurch gekennzeichnet, dass** das Geflügelstalleinrichtungselement drei oder mehr Stützen umfasst und freistehend im Geflügelstall angeordnet ist.

12. Verwendung eines Geflügelstalleinrichtungselement nach einem der vorhergehenden Ansprüche 1-8 in einem Stall zur Aufzucht von Geflügel in Bodenhaltung.

## Claims

1. Poultry house assembly, comprising
- a frame (2) to which mounting elements (3) are attached in order to secure the frame in a position above a house floor
- at least one flat element (1) which
∘ is connected to the frame,
∘ has a horizontal upper standing surface and
∘ has a plurality of orifices,
- a ramp (5) which extends down from the frame at an angle,
**characterised in that**
- the ramp (5) is attached to the frame and/or flat element so as to be pivotable about a first axis and the first axis is oriented perpendicular to the longitudinal extension of the ramp, and/or the ramp (5) is attached to the frame and/or flat element so as to be pivotable about a second axis and the second axis lies horizontally and has a directional component oriented parallel with the longitudinal extension of the ramp.

2. Poultry house assembly as claimed in claim 1, **characterised in that** the mounting elements comprise mounting brackets for mounting the frame on a house side wall.

3. Poultry house assembly as claimed in claim 2, **characterised by** a pivot mechanism on the mounting bracket for pivoting the frame and flat element against the house side wall.

4. Poultry house assembly as claimed in one of the preceding claims,
**characterised in that** the mounting elements comprise one, preferably at least three, struts which extend down from the frame.

5. Poultry house assembly as claimed in one of the preceding claims,
**characterised by** several flat elements, which are preferably of the same type.

6. Poultry house assembly as claimed in one of the preceding claims,
**characterised in that** the flat element(s) is/are detachably connected to the frame.

7. Poultry house assembly as claimed in one of the preceding claims,
**characterised by** several ramps, two ramps preferably extending in opposite directions from one another and/or two ramps preferably being disposed on mutually opposite sides of the flat element.

8. Poultry house assembly as claimed in one of the preceding claims,
**characterised by** a manure conveyor belt underneath the flat element(s).

9. Poultry house having a poultry house assembly as claimed in preceding claim 2 and one of the preceding claims, **characterised in that** the poultry house assembly is secured to a house side wall, preferably secured so as to be foldable about a horizontal axis.

10. Poultry house as claimed in claim 9,
**characterised by** a lock element disposed on the house side wall for locking the poultry house assembly in a position folded against the house side wall.

11. Poultry house having a poultry house assembly as claimed in preceding claim 4 and one of the preceding claims, **characterised in that** the poultry house assembly comprises three or more struts and is disposed in a free-standing arrangement in the poultry house.

12. Use of a poultry house assembly as claimed in one of preceding claims 1-8 in a house for rearing poultry in a free-run system.

## Revendications

1. Élément d'installation de poulailler, comprenant
- un cadre (2), auquel des éléments de pose (3) sont fixés pour la fixation du cadre dans une position au-dessus d'un sol de poulailler,
- au moins un élément plan (1), qui
-- est relié au cadre
-- présente une surface d'appui supérieure horizontale, et
-- présente une pluralité d'ouvertures de passage,
- une rampe (5), qui s'étend en biais vers le bas à partir du cadre,
**caractérisé en ce que**
- la rampe (5) est fixée de manière pivotante autour d'un premier axe au cadre ou à l'élément plan et le premier axe est orienté perpendiculairement à l'extension longitudinale de la rampe, et/ou
la rampe (5) est fixée de manière pivotante autour d'un deuxième axe au cadre ou à l'élément plan et le deuxième axe se trouve à l'horizontale et présente une composante de direction orientée parallèlement à l'extension longitudinale de la rampe.

2. Élément d'installation de poulailler selon la revendication 1,
**caractérisé en ce que** les éléments de pose comprennent des équerres de fixation pour le montage du cadre au niveau d'une paroi latérale de poulailler.

3. Élément d'installation de poulailler selon la revendication 2,
**caractérisé par** un dispositif de pivotement au niveau de l'équerre de fixation pour le pivotement du cadre et de l'élément plan au niveau de la paroi latérale de poulailler.

4. Élément d'installation de poulailler selon l'une quelconque des revendications précédentes,
**caractérisé en ce que** les éléments de pose comprennent un, de préférence au moins trois, appuis, qui s'étendent vers le bas à partir du cadre.

5. Élément d'installation de poulailler selon l'une quelconque des revendications précédentes,
**caractérisé par** plusieurs éléments plans, qui sont de préférence coïncidents.

6. Élément d'installation de poulailler selon l'une quelconque des revendications précédentes,
**caractérisé en ce que** le/les élément(s) plan(s) sont reliés de manière amovible au cadre.

7. Élément d'installation de poulailler selon l'une quelconque des revendications précédentes,
**caractérisé par** plusieurs rampes, dans lequel de préférence deux rampes s'étendent dans une direction opposée l'une à l'autre et/ou de préférence deux rampes sont disposées au niveau de côtés se faisant face l'un l'autre de l'élément plan.

8. Élément d'installation de poulailler selon l'une quelconque des revendications précédentes,
**caractérisé par** un convoyeur de déjections en dessous du/des élément(s) plan(s).

9. Poulailler avec un élément d'installation de poulailler selon la revendication précédente 2 et l'une quelconque des revendications précédentes,
**caractérisé en ce que** l'élément d'installation de poulailler est fixé à une paroi latérale de poulailler, de préférence est fixé de manière pliable autour d'un axe horizontal.

10. Poulailler selon la revendication 9, **caractérisé par** un élément de blocage disposé au niveau de la paroi latérale de poulailler pour le blocage de l'élément d'installation de poulailler dans une position repliée au niveau de la paroi latérale de poulailler.

11. Poulailler avec un élément d'installation de poulailler selon la revendication précédente 4 et l'une quelconque des revendications précédentes,
**caractérisé en ce que** l'élément d'installation de poulailler comprend trois appuis ou plus et est disposé indépendamment dans le poulailler.

12. Utilisation d'un élément d'installation de poulailler selon l'une quelconque des revendications précédentes 1-8 dans un poulailler pour l'élevage de volaille au sol.
